# EUROPEAN PATENT APPLICATION

(11) **EP 4 269 347 A1**
(43) Date of publication of application: **01.11.2023**
(21) Application number: 21915240.2
(22) Date of filing: 24.12.2021
(51) Int. Cl.: C01F 11/18, B01D 53/14, B01D 53/62, B01D 53/72

(54) **METHOD FOR PRODUCING CALCIUM CARBONATE, AND CALCIUM CARBONATE**

(30) Priority: 28.12.2020 JP 2020218308; 05.11.2021 JP 2021180950; 05.11.2021 JP 2021180957
(71) Applicant: Shiraishi Kogyo Kaisha, Ltd., Osaka-shi, Osaka 530-0005 (JP)
(72) Inventor: SAKAGUCHI, Hiromitsu, Amagasaki City, Hyogo 6600085 (JP); OGUNI, Sayaka, Amagasaki City, Hyogo 6600085 (JP); EGUCHI, Kenichiro, Amagasaki City, Hyogo 6600085 (JP); ODA, Toru, Amagasaki City, Hyogo 6600085 (JP); NANRI, Yasunori, Amagasaki City, Hyogo 6600085 (JP)
(74) Representative: Global IP Europe Patentanwaltskanzlei
(86) International application number: PCT/JP2021/048281
(87) International publication number: WO 2022/145380

(57) **Abstract**

To produce a calcium carbonate in a controlled form while carbon dioxide gas is efficiently used. A method for producing a calcium carbonate comprises a carbon dioxide gas absorption step of allowing an aqueous sodium hydroxide solution at a concentration of 5 to 21% to absorb carbon dioxide gas to give an aqueous sodium carbonate solution at a concentration of 4 to 24%; a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and a carbonation step of adding the aqueous sodium carbonate solution to the lime milk and performing reaction.

## Description

### FIELD

The present invention relates to a method for synthe calcium carbonate by using flue gas from a combustion furnace, for example. Specifically, the present invention relates to a method for producing a calcite-type calcium carbonate having a fine particle shape. The present invention also relates to a method for producing a calcite-type calcium carbonate having a spindle shape or an aragonite-type calcium carbonate having a needle-like shape. In other words, the present invention relates to a method for separately producing calcium carbonates having various shapes by changing production conditions. The present invention further relates to a calcium carbonate produced by such a production method.

### BACKGROUND

Conventional methods for industrially synthesizing calcium carbonate include a carbon dioxide bubbling method in which carbon dioxide gas is blown into lime milk for carbonation. The carbon dioxide gas used in the carbon dioxide bubbling method is typically a flue gas from a lime kiln installed near a calcium carbonate production plant. An exhaust gas from a furnace such as a boiler and a garbage incinerator can also be used as a source of the carbon dioxide gas. However, a calcium carbonate production plant may not be installed near a furnace, and such a case requires a flue gas piping system from a facility as the carbon dioxide supply source to a calcium carbonate production plant. When used, flue gas that supplies carbon dioxide gas in various amounts typically has various carbon dioxide concentrations and fails to perform efficient carbonation. In addition, the temperature of flue gas cannot be controlled, and thus a resulting calcium carbonate is likely to have various properties depending on the temperature of the flue gas. Hence, a calcium carbonate having an intended shape cannot be produced. To synthesize calcium carbonate by the carbon dioxide bubbling method, carbon dioxide gas should be once dissolved in water. Accordingly, the reaction time is long, and the reaction efficiency is not high. To improve the absorption efficiency of carbon dioxide gas, the reaction is typically performed at a low temperature and is unsuitably performed at a high temperature. Not all carbon dioxide gas is used in the reaction, and unused carbon dioxide gas is discharged into the atmosphere.

Patent Document 1 discloses a method for producing calcium carbonate. In the method, an aqueous sodium hydroxide solution is allowed to absorb carbon dioxide gas to give sodium carbonate, and the sodium carbonate is reacted with lime milk (aqueous suspension of calcium hydroxide) to yield calcium carbonate. In the method according to Patent Document 1, carbon dioxide gas at various concentrations can be absorbed by an aqueous sodium hydroxide solution, and the carbon dioxide gas can be stored. This enables installation of a calcium carbonate production plant apart from a carbon dioxide gas generation site. The solubility of sodium carbonate in water is much higher than that of carbon dioxide gas, and the solubility does not decrease at high temperatures. This enables production of calcium carbonate in conditions of high temperatures and high concentrations. If carbon dioxide gas unused in the reaction in the above carbon dioxide bubbling method could be recovered in an aqueous sodium hydroxide solution, the amount of carbon dioxide gas discharged into the atmosphere should be reduced.

### CITATION LIST

### PATENT LITERATURE

[Patent Document 1] JP 2002-293537 A

### BRIEF SUMMARY

### TECHNICAL PROBLEM

In the production method according to Patent Document 1, when an aqueous sodium hydroxide solution at a low concentration is allowed to absorb carbon dioxide gas, the absorption efficiency of carbon dioxide gas is low, and thus carbon dioxide gas cannot be used to the maximum extent. In this case, the resulting solution has a low sodium carbonate concentration, and this reduces the production efficiency of calcium carbonate. In addition, the particle size, the crystal form, and the shape of the calcium carbonate produced by the production method according to Patent Document 1 are undefined. The present invention is therefore intended to produce a calcium carbonate in a controlled form while carbon dioxide gas is efficiently used. Specifically, the present invention is intended to efficiently produce a calcite-type calcium carbonate having a fine particle shape while an exhaust gas or the like is optionally used. The present invention is also intended to efficiently produce a calcite-type calcium carbonate having a spindle shape or an aragonite-type calcium carbonate having a needle-like shape while an exhaust gas or the like is optionally used.

The present invention is further intended to reuse, in a carbon dioxide gas absorption step, carbon dioxide gas unused in a previous carbon dioxide gas absorption step and to recycle sodium hydroxide contained in a filtrate or a used washing liquid obtained in a calcium carbonate production process into a carbon dioxide gas absorption step or a hydration step for reusing the sodium hydroxide.

The present invention is also intended to allow an aqueous sodium hydroxide solution to absorb carbon dioxide gas in an exhaust gas from a combustion furnace or the like installed apart from a calcium carbonate production site to give sodium carbonate, which can be transported to the production site for use, and intended to generally suppress carbon dioxide gas emission into the environment by carrying out the present invention to contribute to global warming mitigation.

### SOLUTION TO PROBLEM

A first aspect of the present invention relates to a method for producing a calcium carbonate. The method comprises a carbon dioxide gas absorption step of allowing an aqueous sodium hydroxide solution at a concentration of 5 to 21% to absorb carbon dioxide gas to give an aqueous sodium carbonate solution at a concentration of 4 to 24%; a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and a carbonation step of adding the aqueous sodium carbonate solution to the lime milk and performing reaction.

In the carbonation step, the lime milk may be adjusted at a solid concentration of 1 to 24%, the aqueous sodium carbonate solution may be added to the lime milk having an adjusted solid concentration, and the reaction may be performed at a temperature of 9 to 80°C.

The method may further comprise, after the carbonation step, a solid-liquid separation step of separating a filtrate containing sodium hydroxide from calcium carbonate.

In the above production method, the filtrate containing sodium hydroxide may be adjusted at a sodium hydroxide concentration of 5 to 21% and may be reused in the carbon dioxide gas absorption step.

A second aspect of the present invention relates to a calcium carbonate produced by the method for producing a calcium carbonate pertaining to the first aspect.

A third aspect of the present invention relates to a method for producing a calcium carbonate. The method comprises a carbon dioxide gas absorption step of allowing an aqueous sodium hydroxide solution at a concentration of 5 to 21% to absorb carbon dioxide gas to give an aqueous sodium carbonate solution at a concentration of 4 to 24% or less,
a hydration step of reacting calcium oxide with an aqueous sodium hydroxide solution at a concentration of 0 to less than 6% to give a lime milk that is a suspension of calcium hydroxide having a BET specific surface area of 5 to 40 m²/g, and
a carbonation step of adding the aqueous sodium carbonate solution prepared in the carbon dioxide gas absorption step to the lime milk and performing reaction.

In the method for producing a calcium carbonate, in the carbonation step, the lime milk has an initial concentration of 1 to 6%, the aqueous sodium carbonate solution has a concentration of 4 to 22%, and the reaction is performed at 9 to 25°C to yield a calcite-type calcium carbonate having a fine particle shape and having a BET specific surface area of 30 to 90 m²/g.

In the method, carbon dioxide gas unused in the carbon dioxide gas absorption step may be reused in the carbon dioxide gas absorption step.

The method may further comprise, after the carbonation step, a solid-liquid separation step of separating a filtrate containing sodium hydroxide from calcium carbonate, and
a washing step of washing the calcium carbonate prepared in the solid-liquid separation step with a washing liquid.

The filtrate prepared in the solid-liquid separation step and the used washing liquid after the washing step may be mixed with an aqueous sodium hydroxide solution at a high concentration, or the filtrate and the used washing liquid are concentrated by heating, to give an aqueous solution containing sodium hydroxide at a concentration of 5 to 21%, and the aqueous solution may be used in the carbon dioxide gas absorption step.

It is also preferred that the filtrate prepared in the solid-liquid separation step and the used washing liquid after the washing step be adjusted to give an aqueous solution containing sodium hydroxide at a concentration of less than 6%, and the aqueous solution be used in the hydration step.

A fourth aspect of the present invention relates to a calcium carbonate produced by the method for producing a calcium carbonate pertaining to the third aspect.

A fifth aspect of the present invention relates to a method for producing a calcium carbonate. The method comprises a carbon dioxide gas absorption step of allowing an aqueous sodium hydroxide solution at a concentration of 13 to 21% to absorb carbon dioxide gas to give an aqueous sodium carbonate solution at a concentration of 15 to 24%,
a hydration step of reacting calcium oxide with an aqueous sodium hydroxide solution at a concentration of 0 to less than 6% to give a lime milk that is a suspension of calcium hydroxide having a BET specific surface area of 5 to 40 m²/g, and
a carbonation step of adding the aqueous sodium carbonate solution prepared in the carbon dioxide gas absorption step to the lime milk and performing reaction.

In the method for producing a calcium carbonate, in the carbonation step, the lime milk has an initial concentration of 11 to 19%, the aqueous sodium carbonate solution has a concentration of 15 to 24%, and the reaction is performed at 20 to 40°C to yield a calcite-type calcium carbonate having a spindle shape and having a BET specific surface area of 4 to 20 m²/g.

In the method, carbon dioxide gas unused in the carbon dioxide gas absorption step may be reused in the carbon dioxide gas absorption step.

The method may further comprise, after the carbonation step, a solid-liquid separation step of separating a filtrate containing sodium hydroxide from calcium carbonate, and
a washing step of washing the calcium carbonate prepared in the solid-liquid separation step with a washing liquid.

The filtrate prepared in the solid-liquid separation step and the used washing liquid after the washing step may be mixed with an aqueous sodium hydroxide solution at a high concentration, or the filtrate and the used washing liquid are concentrated by heating, to give an aqueous solution containing sodium hydroxide at a concentration of 13 to 21%, and the aqueous solution may be used in the carbon dioxide gas absorption step.

It is also preferred that the filtrate prepared in the solid-liquid separation step and the used washing liquid after the washing step be adjusted to give an aqueous solution containing sodium hydroxide at a concentration of less than 6%, and the aqueous solution be used in the hydration step.

A sixth aspect of the present invention relates to a calcium carbonate produced by the method for producing a calcium carbonate pertaining to the fifth aspect.

A seventh aspect of the present invention relates to a method for producing a calcium carbonate. The method comprises
a carbon dioxide gas absorption step of allowing an aqueous sodium hydroxide solution at a concentration of 13 to 21% to absorb carbon dioxide gas to give an aqueous sodium carbonate solution at a concentration of 15 to 24%,
a hydration step of reacting calcium oxide with an aqueous sodium hydroxide solution at a concentration of 0 to less than 6% to give a lime milk that is a suspension of calcium hydroxide having a BET specific surface area of 5 to 40 m²/g, and
a carbonation step of adding the aqueous sodium carbonate solution prepared in the carbon dioxide gas absorption step to the lime milk and performing reaction.

In the method for producing a calcium carbonate, in the carbonation step, the lime milk has an initial concentration of 11 to 24%, the aqueous sodium carbonate solution has a concentration of 15 to 24%, and the reaction is performed at 40 to 80°C to yield an aragonite-type calcium carbonate having a needle-like shape and having a BET specific surface area of 3 to 10 m²/g.

In the method, carbon dioxide gas unused in the carbon dioxide gas absorption step may be reused in the carbon dioxide gas absorption step.

The method may further comprise, after the carbonation step, a solid-liquid separation step of separating a filtrate containing sodium hydroxide from calcium carbonate, and
a washing step of washing the calcium carbonate prepared in the solid-liquid separation step with a washing liquid.

The filtrate prepared in the solid-liquid separation step and the used washing liquid after the washing step may be mixed with an aqueous sodium hydroxide solution at a high concentration, or the filtrate and the used washing liquid are concentrated by heating, to give an aqueous solution containing sodium hydroxide at a concentration of 13 to 21%, and the aqueous solution may be used in the carbon dioxide gas absorption step.

It is also preferred that the filtrate prepared in the solid-liquid separation step and the used washing liquid after the washing step be adjusted to give an aqueous solution containing sodium hydroxide at a concentration of less than 6%, and the aqueous solution be used in the hydration step.

An eighth aspect of the present invention relates to a calcium carbonate produced by the method for producing a calcium carbonate pertaining to the seventh aspect.

### ADVANTAGEOUS EFFECTS

According to the present invention, by preparing an aqueous sodium carbonate solution and aqueous sodium hydroxide solution at high concentrations in steps as compared with conventional methods and by using a calcium hydroxide slurry at a high concentration as compared with conventional methods, a calcium carbonate having an intended particle shape can be efficiently and continuously produced. By returning, to a step, flue gas and carbon dioxide gas unreacted in the step, and by increasing the concentrations of the above reaction liquids, the amount of carbon dioxide gas generated during production and the amount of an alkaline waste liquid containing sodium hydroxide can be reduced to lighten the environmental load. In addition, the method can use carbon dioxide gas in an exhaust gas from a combustion furnace or the like installed apart from a production site and is also useful for fixing carbon dioxide gas that has been discharged into the environment.

The production method of the present invention can yield a calcium carbonate having an intended shape and particle size. The method enables controlled continuous production of calcium carbonates suited for various applications including paper-making, coating pigments, plastics, sealants, rubber, and food.

### BRIEF DESCRIPTION OF DRAWINGS

[FIG. 1] FIG. 1 is a flow chart illustrating a production method of the present invention.
[FIG. 2] FIG. 2 is an electron micrograph (magnification: ×30,000) of a calcium carbonate produced in Example 1, in which fine particles are chained.
[FIG. 3] FIG. 3 is an electron micrograph (magnification: ×20,000) of a spindle calcium carbonate produced in Example 2.
[FIG. 4] FIG. 4 is an electron micrograph (magnification: ×10,000) of an acicular calcium carbonate produced in Example 3.
[FIG. 5] FIG. 5 is an electron micrograph (magnification: ×10,000) of an acicular calcium carbonate produced in Example 4.
[FIG. 6] FIG. 6 is an electron micrograph (magnification: ×10,000) of an acicular calcium carbonate produced in Example 5.

### DETAILED DESCRIPTION

Embodiments of the present invention will be described in further detail, but the present invention is not limited to the following embodiments.

A first embodiment of the present invention is a method for producing a calcium carbonate. The method comprises a carbon dioxide gas absorption step of allowing an aqueous sodium hydroxide solution at a concentration of 5 to 21% to absorb carbon dioxide gas to give an aqueous sodium carbonate solution at a concentration of 6 to 24%; a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and a carbonation step of adding the aqueous sodium carbonate solution to the lime milk and performing reaction. The present embodiment is a method for producing a calcium carbonate at least comprising a carbon dioxide gas absorption step, a hydration step, and a carbonation step. The carbon dioxide gas absorption step is a step of allowing an aqueous sodium hydroxide solution to absorb carbon dioxide gas to give an aqueous sodium carbonate solution. Sodium hydroxide is generally called caustic soda, and a commercial product may be appropriately used. The aqueous sodium hydroxide solution may be prepared by dissolving sodium hydroxide in water, and a liquid containing sodium hydroxide produced in papermaking (what is called "white liquor") may also be used. The aqueous sodium hydroxide solution used in the step may have a sodium hydroxide concentration of 5 to 21%, preferably 8 to 19%, and more preferably 13 to 18%. By using an aqueous sodium hydroxide solution at a concentration of up to 21% in the step, the absorption efficiency of carbon dioxide gas can be improved. In the present embodiment, the carbon dioxide gas to be absorbed by the aqueous sodium hydroxide solution may be a gas containing only carbon dioxide or may be a mixed gas containing carbon dioxide gas and another gas. The carbon dioxide gas used in the present embodiment may be an exhaust gas containing carbon dioxide gas. Examples of the exhaust gas include exhaust gases from lime kilns, boilers, garbage incinerators, cement furnaces, refractory furnaces, steelmaking converters, steelmaking blast furnaces, cupolas, coke gas generation furnaces, coal gas generation furnaces, oil cracking furnaces, glassmaking reverberatory furnaces, oil gas generation furnaces, and acetylene generation furnaces. An aqueous sodium hydroxide solution absorbs carbon dioxide gas to yield sodium carbonate. Carbon dioxide gas may be absorbed until the concentration of sodium carbonate reaches 4 to 24%, preferably 10.2 to 22.8%, and more preferably 16.1 to 21.6%. In the present description, % means % by weight unless otherwise specified.

In the first embodiment, the hydration step is a step of reacting calcium oxide with an aqueous sodium hydroxide solution at a concentration of 0 to less than 6% to give a lime milk. The lime milk is an aqueous suspension of calcium hydroxide (aqueous calcium hydroxide slurry). The calcium oxide used in the hydration step is an oxide of calcium generally called quick lime. A commercially available calcium oxide may be appropriately used. The aqueous sodium hydroxide solution to be reacted with calcium oxide in the step has a concentration of 0 to less than 6%. The calcium hydroxide prepared in the step is a hydroxide of calcium generally called slaked lime. In the hydration step, a suspension of calcium hydroxide having a BET specific surface area of 5 to 40 m²/g is preferably prepared. A BET specific surface area may be determined in accordance with "Determination of the specific surface area of powders (solids) by gas adsorption-BET method" in JIS Z 8830 (ISO 9277: 2010). By controlling the amounts of calcium oxide and water to be reacted, a calcium hydroxide having a BET specific surface area of 5 to 40 m²/g can be prepared. When a large amount of water is used relative to the amount of calcium oxide, a calcium hydroxide having a large BET specific surface area can be prepared. When a small amount of water is used relative to the amount of calcium oxide, a calcium hydroxide having a small BET specific surface area can be prepared. The hydration step and the above carbon dioxide gas absorption step may be simultaneously performed, or may be successively performed: for example, the carbon dioxide gas absorption step is followed by the hydration step; or the hydration step is followed by the carbon dioxide gas absorption step. Preparing a calcium hydroxide having a BET specific surface area within an appropriate range in the hydration step is involved in the present embodiment to finally produce a calcium carbonate in an intended form.

In the first embodiment, the carbonation step is a step of reacting the lime milk prepared in the hydration step with the aqueous sodium carbonate solution prepared in the carbon dioxide gas absorption step to yield calcium carbonate. This step is also generally called a causticization step. In the step, the lime milk to be used is particularly preferably adjusted at a solid concentration of 1 to 24%. When the aqueous sodium carbonate solution is added to the lime milk preferably adjusted at a solid concentration within the above range, the aqueous sodium carbonate solution is preferably added such that the molar ratio of the sodium carbonate in the aqueous sodium carbonate solution to the calcium hydroxide in the lime milk is 0.9 to 1.5. An aqueous sodium carbonate solution adjusted at a concentration of 4 to 24% is specifically preferably added. For the addition, the aqueous sodium carbonate solution is particularly preferably added to the lime milk over 60 to 180 minutes or over 100 to 150 minutes. To the lime milk adjusted at a certain solid concentration, the aqueous sodium carbonate solution prepared in the carbon dioxide gas absorption step and optionally adjusted at a certain concentration is preferably added, and the mixture is preferably reacted at a temperature of 9 to 80°C or 10 to 55°C. An excessively high reaction temperature or an excessively low reaction temperature in the carbonation step increases the cost of energy or the like for heating or cooling. When the BET specific surface area of calcium hydroxide is adjusted as described above to produce a calcium carbonate containing a large amount of aragonite crystals, and the carbonation step is performed at a high reaction temperature, the resulting (needle-like) aragonite crystals are likely to thicken. The reaction in the carbonation step is preferably performed while the reaction liquid is stirred. Preferably, a stirrer may be controlled such that the time (complete mixing time) from gradually adding the aqueous sodium carbonate solution to the lime milk to completely mixing them is 3 to 25 seconds or 5 to 22 seconds. As the means for stirring the content in a reaction container, a conventionally used stirrer such as a propeller stirrer, a paddle blade stirrer, a ribbon stirrer, a turbine blade stirrer, a horseshoe stirrer, a spinning stirrer, a mixer, and a magnetic stirrer may be used. Through the reaction in the step, calcium carbonate and sodium hydroxide are formed. The water-soluble sodium hydroxide is dissolved in the reaction liquid, whereas the poorly water-soluble calcium carbonate is precipitated as a solid.

The method in the first embodiment may further comprise a solid-liquid separation step in which the calcium carbonate produced by the reaction in the carbonation step is separated from the reaction liquid and is taken out in a solid state. The reaction liquid (filtrate) remaining after separation of the solid calcium carbonate is an aqueous sodium hydroxide solution, which may be reused in the above carbon dioxide gas absorption step. When the filtrate is reused in the carbon dioxide gas absorption step, the filtrate is preferably adjusted at a sodium hydroxide concentration of 5 to 21%, preferably 8 to 19%, and more preferably 13 to 18%.

A calcium carbonate pertaining to a second embodiment of the present invention and produced by the production method pertaining to the first embodiment may have any crystal form including a calcite crystal form, an aragonite crystal form, and a vaterite crystal form. By changing conditions including concentrations and temperatures in the above steps, calcium carbonates in various crystal forms can be produced. The prepared calcium carbonate particles may have various shapes such as a spherical shape, an approximately cubic shape, a spindle shape, a needle-like shape, and a shape in which microsphere crystals are chained.

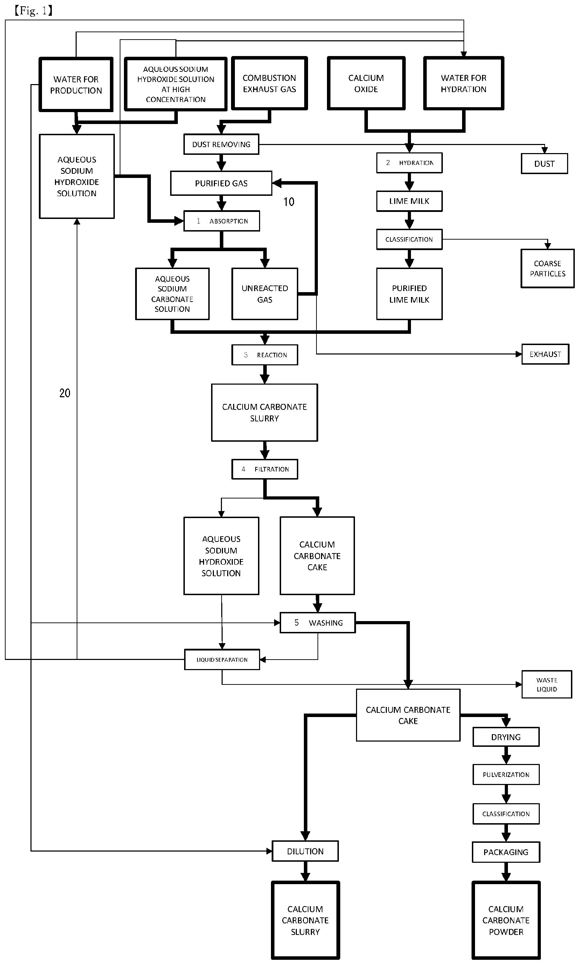

A flow of the first embodiment of the present invention will next be described with reference to FIG. 1. FIG. 1 shows a flow of the method for producing a calcium carbonate in the embodiment of the present invention by using carbon dioxide gas in an exhaust gas from a combustion furnace or the like. In the drawing, 1 is a carbon dioxide gas absorption step; 2 is a hydration step; 3 is a carbonation step; 4 is a solid-liquid separation step; and 5 is a washing step. An exhaust gas from a combustion furnace or the like is optionally subjected to dust removing treatment to give a purified gas containing carbon dioxide gas. An aqueous sodium hydroxide solution adjusted at a concentration of 5 to 21% is separately prepared, for example, by appropriately mixing water for production with an aqueous sodium hydroxide solution at a high concentration, and is allowed to absorb the purified gas (carbon dioxide gas absorption step 1). Accordingly, an aqueous sodium carbonate solution at a concentration of 4 to 24% is prepared. Unreacted gas that has not been absorbed in the carbon dioxide gas absorption step 1 is returned as shown by the arrow 10 and is reused in the carbon dioxide gas absorption step 1.

Separately, calcium oxide and water for hydration (an aqueous sodium hydroxide solution at a concentration of 0 to less than 6%) are prepared and are reacted (hydration step 2). The reaction mixture is optionally subjected to classification or the like to give a purified lime milk that is a suspension of calcium hydroxide having a BET specific surface area of 5 to 40 m²/g.

The purified lime milk prepared as above is reacted with the aqueous sodium carbonate solution (carbonation step 3) to yield calcium carbonate. The formed calcium carbonate is filtered (solid-liquid separation step 4), and the resulting solid calcium carbonate is washed with a washing liquid (washing step 5). The filtrate after the solid-liquid separation step 4 and the used washing liquid after the washing step 5 are recovered and reused as the aqueous sodium hydroxide solution in the carbon dioxide gas absorption step 1 or as the water for hydration in the hydration step 2 (arrows 20 and 30).

In the first embodiment, in the carbonation step 3 in FIG. 1, the lime milk has an initial concentration of 1 to 24%, the aqueous sodium carbonate solution preferably has a concentration of 4 to 24%, and the reaction is performed at 9 to 80°C.

By the method for producing a calcium carbonate in the first embodiment, an aqueous sodium hydroxide solution at a relatively high concentration can efficiently absorb carbon dioxide gas. By the absorption, an aqueous sodium carbonate solution having an intended concentration can be prepared regardless of the concentration of carbon dioxide gas. As described in the following embodiments, by reacting, in the carbonation step, an aqueous sodium carbonate solution at a certain concentration with a lime milk at a certain solid concentration at a certain temperature for a certain time period, a calcium carbonate having an intended shape can be produced.

The method for producing a calcium carbonate in the first embodiment may repeatedly reuse an aqueous sodium hydroxide solution as the absorbent for carbon dioxide gas, and this can reduce waste liquid and lighten the environmental load.

A third embodiment of the present invention is a method for producing a calcium carbonate. The method comprises a carbon dioxide gas absorption step of allowing an aqueous sodium hydroxide solution at a concentration of 5 to 21% to absorb carbon dioxide gas to give an aqueous sodium carbonate solution at a concentration of 4 to 24%; a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and a carbonation step of adding the aqueous sodium carbonate solution prepared in the carbon dioxide gas absorption step to the lime milk and performing reaction.

In the carbonation step, the lime milk has an initial concentration of 1 to 6%, the aqueous sodium carbonate solution has a concentration of 4 to 22%, and the reaction is performed at 9 to 25°C to yield a calcite-type calcium carbonate having a fine particle shape and having a BET specific surface area of 30 to 90 m²/g. The present embodiment is a method for producing a calcium carbonate at least comprising a carbon dioxide gas absorption step, a hydration step, and a carbonation step. The carbon dioxide gas absorption step is a step of allowing an aqueous sodium hydroxide solution to absorb carbon dioxide gas (carbon dioxide) to give an aqueous sodium carbonate solution. Sodium hydroxide is generally called caustic soda, and a commercial product may be appropriately used. The aqueous sodium hydroxide solution may be prepared by dissolving sodium hydroxide in water, and a liquid containing sodium hydroxide produced in papermaking (what is called "white liquor") may also be used. The aqueous sodium hydroxide solution used in the step may have a sodium hydroxide concentration of 5 to 21% and preferably 8 to 15%. By using an aqueous sodium hydroxide solution at a concentration of up to 21% in the step, the absorption efficiency of carbon dioxide gas can be improved. In the present embodiment, the carbon dioxide gas to be absorbed by the aqueous sodium hydroxide solution may be a gas containing only carbon dioxide or may be a mixed gas containing carbon dioxide gas and another gas. The carbon dioxide gas used in the present embodiment may be an exhaust gas containing carbon dioxide gas. Examples of the exhaust gas include exhaust gases from lime kilns, boilers, garbage incinerators, cement furnaces, refractory furnaces, steelmaking converters, steelmaking blast furnaces, cupolas, coke gas generation furnaces, coal gas generation furnaces, oil cracking furnaces, glassmaking reverberatory furnaces, oil gas generation furnaces, and acetylene generation furnaces. An aqueous sodium hydroxide solution absorbs carbon dioxide gas to yield sodium carbonate. Carbon dioxide gas may be absorbed until the concentration of sodium carbonate reaches 4 to 24%. In the present description, % means % by weight unless otherwise specified.

Carbon dioxide gas unused in the carbon dioxide gas absorption step is not discharged into the atmosphere without treatment, but is particularly preferably reused by absorption in the aqueous sodium hydroxide solution in the carbon dioxide gas absorption step from the viewpoint of environmental preservation.

In the third embodiment, the hydration step is a step of reacting calcium oxide with an aqueous sodium hydroxide solution at a concentration of 0 to less than 6% to give a lime milk. The lime milk is an aqueous suspension of calcium hydroxide (aqueous calcium hydroxide slurry). The calcium oxide used in the hydration step is an oxide of calcium generally called quick lime. A commercially available calcium oxide may be appropriately used. The aqueous sodium hydroxide solution to be reacted with calcium oxide in the step has a concentration of 0 to less than 6%. The calcium hydroxide prepared in the step is a hydroxide of calcium generally called slaked lime. In the hydration step, a suspension of calcium hydroxide having a BET specific surface area of 5 to 40 m²/g is preferably prepared. A BET specific surface area may be determined in accordance with "Determination of the specific surface area of powders (solids) by gas adsorption-BET method" in JIS Z 8830 (ISO 9277: 2010). By controlling the amounts or the concentrations of calcium oxide and an aqueous sodium hydroxide solution to be reacted, a calcium hydroxide having a BET specific surface area of 5 to 40 m²/g can be prepared. When a large amount of an aqueous sodium hydroxide solution is used relative to the amount of calcium oxide, a calcium hydroxide having a large BET specific surface area can be prepared. When a small amount of an aqueous sodium hydroxide solution is used relative to the amount of calcium oxide, a calcium hydroxide having a small BET specific surface area can be prepared. When an aqueous sodium hydroxide solution at an excessively high concentration is used in the hydration step, the resulting calcium hydroxide is likely to have a high BET specific surface area, and a calcium hydroxide having an intended BET specific surface area cannot be prepared. In addition, the lime milk becomes viscous and is difficult to handle. In particular, the calcium hydroxide contained in the lime milk prepared in the step preferably has a BET specific surface area of 5 to 40 m²/g from the viewpoint that most of the calcium carbonate prepared in the carbonation step described later has a fine particle shape as the crystal form. The hydration step and the above carbon dioxide gas absorption step may be simultaneously performed, or may be successively performed: for example, the carbon dioxide gas absorption step is followed by the hydration step; or the hydration step is followed by the carbon dioxide gas absorption step. Preparing a calcium hydroxide having a BET specific surface area within an appropriate range in the hydration step is involved in the present embodiment to finally produce a calcium carbonate in an intended form.

In the third embodiment, the carbonation step is a step of reacting the lime milk prepared in the hydration step with the aqueous sodium carbonate solution prepared in the carbon dioxide gas absorption step to yield calcium carbonate. This step is also generally called a causticization step. In the step, the lime milk to be used is particularly preferably adjusted at a solid concentration of 1 to 6%. In particular, a lime milk at an initial concentration of 1 to 6% is preferably reacted with an aqueous sodium carbonate solution at a concentration of 4 to 22%. The aqueous sodium carbonate solution to be used is prepared by appropriately adjusting the concentration of the aqueous sodium carbonate solution that has been prepared in the carbon dioxide gas absorption step and has a concentration of 4 to 24%. Depending on the reaction scale of the carbonation step, the aqueous sodium carbonate solution is gradually added to the lime milk particularly preferably over a certain time period, for example, over 60 to 180 minutes or 100 to 150 minutes. The reaction in the carbonation step is preferably performed while the reaction liquid is stirred. Preferably, a stirrer may be controlled such that the time (complete mixing time) from gradually adding the aqueous sodium carbonate solution to the lime milk to completely mixing them is 3 to 25 seconds or 5 to 22 seconds. As the means for stirring the content in a reaction container, a conventionally used stirrer such as a propeller stirrer, a paddle blade stirrer, a ribbon stirrer, a turbine blade stirrer, a horseshoe stirrer, a spinning stirrer, a mixer, and a magnetic stirrer may be used.

By adding, to the lime milk having an adjusted initial solid concentration, the aqueous sodium carbonate solution prepared in the carbon dioxide gas absorption step and having an adjusted concentration and reacting the mixture at a temperature of 9 to 25°C, a calcite-type calcium carbonate having a fine particle shape and having a BET specific surface area of 30 to 90 m²/g can be produced. An excessively high reaction temperature or an excessively low reaction temperature in the carbonation step increases the cost of energy or the like for heating or cooling and fails to produce a calcium carbonate having an intended shape and having an intended BET specific surface area. Through the reaction in the step, calcium carbonate and sodium hydroxide are formed, and the water-soluble sodium hydroxide is dissolved in the reaction liquid, whereas the poorly water-soluble calcium carbonate is precipitated as a solid. In the present description, "crystals having a fine particle shape" mean that crystals comprise fine primary particles, for example, having a BET specific surface area of 30 m²/g or more. Crystals of calcium carbonate include polymorphs such as calcite crystals, aragonite crystals, and vaterite crystals, and the calcium carbonate produced by the production method in the embodiment is calcite crystals. Crystals having a fine particle shape may contain, for example, crystals having a crystal structure in which a single crystal is a hexahedron, and at least one pair of opposite faces of the hexahedron are rhombuses (hexagonal rhombohedral lattice).

The method in the third embodiment may further comprise a solid-liquid separation step in which the calcium carbonate produced by the reaction in the carbonation step is separated from the reaction liquid and is taken out in a solid state. The method may further comprise a washing step of washing the solid calcium carbonate prepared in the solid-liquid separation step with a washing liquid. The calcium carbonate prepared in the solid-liquid separation step is preferably washed with water. The liquid (filtrate) after separation of the solid calcium carbonate in the solid-liquid separation step and the used washing liquid after the washing step are an aqueous sodium hydroxide solution. The aqueous sodium hydroxide solution may be reused in the above carbon dioxide gas absorption step. To reuse the filtrate and the used washing liquid in the carbon dioxide gas absorption step, the sodium hydroxide concentration is preferably adjusted at 5 to 21%. To adjust the sodium hydroxide concentration, for example, an aqueous sodium hydroxide solution at a high concentration (an aqueous sodium hydroxide solution at a concentration of 5% or more) is added, solid sodium hydroxide is added, or the filtrate and the used washing liquid are concentrated by heating.

The filtrate after the solid-liquid separation step and the used washing liquid after the washing step may also be reused in the above hydration step. To reuse the filtrate and the used washing liquid in the hydration step, the sodium hydroxide concentration is preferably adjusted at less than 6%. To adjust the sodium hydroxide concentration, for example, water is added for dilution.

A flow of the third embodiment of the present invention will next be described with reference to FIG. 1. FIG. 1 shows a flow of the method for producing a calcium carbonate in the embodiment of the present invention by using carbon dioxide gas in an exhaust gas from a combustion furnace or the like. In the drawing, 1 is a carbon dioxide gas absorption step; 2 is a hydration step; 3 is a carbonation step; 4 is a solid-liquid separation step; and 5 is a washing step. An exhaust gas from a combustion furnace or the like is optionally subjected to dust removing treatment to give a purified gas containing carbon dioxide gas. An aqueous sodium hydroxide solution adjusted at a concentration of 5 to 21% is separately prepared, for example, by appropriately mixing water for production with an aqueous sodium hydroxide solution at a high concentration, and is allowed to absorb the purified gas (carbon dioxide gas absorption step 1). Accordingly, an aqueous sodium carbonate solution at a concentration of 4 to 24% is prepared. Unreacted gas that has not been absorbed in the carbon dioxide gas absorption step 1 is returned as shown by the arrow 10 and is reused in the carbon dioxide gas absorption step 1.

Separately, calcium oxide and water for hydration (an aqueous sodium hydroxide solution at a concentration of 0 to less than 6%) are prepared and are reacted (hydration step 2). The reaction mixture is optionally subjected to classification or the like to give a purified lime milk that is a suspension of calcium hydroxide having a BET specific surface area of 5 to 40 m²/g.

The purified lime milk prepared as above is reacted with the aqueous sodium carbonate solution (carbonation step 3) to yield calcium carbonate. The formed calcium carbonate is filtered (solid-liquid separation step 4), and the resulting solid calcium carbonate is washed with a washing liquid (washing step 5). The filtrate after the solid-liquid separation step 4 and the used washing liquid after the washing step 5 are recovered and reused as the aqueous sodium hydroxide solution in the carbon dioxide gas absorption step 1 or as the water for hydration in the hydration step 2 (arrows 20 and 30).

In the third embodiment, in the carbonation step 3 in FIG. 1, the lime milk has an initial concentration of 1 to 6%, the aqueous sodium carbonate solution has a concentration of 4 to 22%, and the reaction is performed at 9 to 25°C. By the production method pertaining to the third embodiment, a calcium carbonate pertaining to a fourth embodiment of the present invention can be produced. The calcium carbonate pertaining to the fourth embodiment is preferably a calcite-type calcium carbonate having a fine particle shape and having a BET specific surface area of 30 to 90 m²/g.

By the method for producing a calcium carbonate in the third embodiment of the present invention, an aqueous sodium hydroxide solution at a relatively high concentration can efficiently absorb carbon dioxide gas. By the absorption, an aqueous sodium carbonate solution having an intended concentration can be prepared regardless of the concentration of carbon dioxide gas. By reacting, in the carbonation step, an aqueous sodium carbonate solution at a certain initial concentration with a lime milk at a certain initial solid concentration in a certain temperature range for a certain time period, an intended calcite-type calcium carbonate having a fine particle shape can be produced.

The method for producing a calcium carbonate in the third embodiment of the present invention can repeatedly reuse carbon dioxide gas and an aqueous sodium hydroxide solution, and this can reduce carbon dioxide and waste liquid discharged into the environment and lighten the environmental load.

A fifth embodiment of the present invention is a method for producing a calcium carbonate. The method comprises a carbon dioxide gas absorption step of allowing an aqueous sodium hydroxide solution at a concentration of 13 to 21% to absorb carbon dioxide gas to give an aqueous sodium carbonate solution at a concentration of 15 to 24%; a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and a carbonation step of adding the aqueous sodium carbonate solution prepared in the carbon dioxide gas absorption step to the lime milk and performing reaction.

In the carbonation step, the lime milk has an initial concentration of 11 to 19%, the aqueous sodium carbonate solution has a concentration of 15 to 24%, and the reaction is performed at 20 to 40°C to yield a calcite-type calcium carbonate having a spindle shape and having a BET specific surface area of 4 to 20 m²/g. The present embodiment is a method for producing a calcium carbonate at least comprising a carbon dioxide gas absorption step, a hydration step, and a carbonation step. The carbon dioxide gas absorption step is a step of allowing an aqueous sodium hydroxide solution to absorb carbon dioxide gas (carbon dioxide) to give an aqueous sodium carbonate solution. Sodium hydroxide is generally called caustic soda, and a commercial product may be appropriately used. The aqueous sodium hydroxide solution may be prepared by dissolving sodium hydroxide in water, and a liquid containing sodium hydroxide produced in papermaking (what is called "white liquor") may also be used. The aqueous sodium hydroxide solution used in the step may have a sodium hydroxide concentration of 13 to 21% and preferably 15 to 20%. By using an aqueous sodium hydroxide solution at a concentration of up to 21% in the step, the absorption efficiency of carbon dioxide gas can be improved. In the present embodiment, the carbon dioxide gas to be absorbed by the aqueous sodium hydroxide solution may be a gas containing only carbon dioxide or may be a mixed gas containing carbon dioxide gas and another gas. The carbon dioxide gas used in the present embodiment may be an exhaust gas containing carbon dioxide gas. Examples of the exhaust gas include exhaust gases from lime kilns, boilers, garbage incinerators, cement furnaces, refractory furnaces, steelmaking converters, steelmaking blast furnaces, cupolas, coke gas generation furnaces, coal gas generation furnaces, oil cracking furnaces, glassmaking reverberatory furnaces, oil gas generation furnaces, and acetylene generation furnaces. An aqueous sodium hydroxide solution absorbs carbon dioxide gas to yield sodium carbonate. Carbon dioxide gas may be absorbed until the concentration of sodium carbonate reaches 15 to 24%. In the present description, % means % by weight unless otherwise specified.

Carbon dioxide gas unused in the carbon dioxide gas absorption step is not discharged into the atmosphere without treatment, but is particularly preferably reused by absorption in the aqueous sodium hydroxide solution in the carbon dioxide gas absorption step from the viewpoint of environmental preservation.

In the fifth embodiment, the hydration step is a step of reacting calcium oxide with an aqueous sodium hydroxide solution at a concentration of 0 to less than 6% to give a lime milk. The lime milk is an aqueous suspension of calcium hydroxide (aqueous calcium hydroxide slurry). The calcium oxide used in the hydration step is an oxide of calcium generally called quick lime. A commercially available calcium oxide may be appropriately used. The aqueous sodium hydroxide solution to be reacted with calcium oxide in the step has a concentration of 0 to less than 6%. The calcium hydroxide prepared in the step is a hydroxide of calcium generally called slaked lime. In the hydration step, a suspension of calcium hydroxide having a BET specific surface area of 5 to 40 m²/g is preferably prepared. A BET specific surface area may be determined in accordance with "Determination of the specific surface area of powders (solids) by gas adsorption-BET method" in JIS Z 8830 (ISO 9277: 2010). By controlling the amounts or the concentrations of calcium oxide and an aqueous sodium hydroxide solution to be reacted, a calcium hydroxide having a BET specific surface area of 5 to 40 m²/g can be prepared. When a large amount of an aqueous sodium hydroxide solution is used relative to the amount of calcium oxide, a calcium hydroxide having a large BET specific surface area can be prepared. When a small amount of an aqueous sodium hydroxide solution is used relative to the amount of calcium oxide, a calcium hydroxide having a small BET specific surface area can be prepared. When an aqueous sodium hydroxide solution at an excessively high concentration is used in the hydration step, the resulting calcium hydroxide is likely to have a high BET specific surface area, and a calcium hydroxide having an intended BET specific surface area cannot be prepared. In addition, the lime milk becomes viscous and is difficult to handle. In particular, the calcium hydroxide contained in the lime milk prepared in the step preferably has a BET specific surface area of 15 to 40 m²/g from the viewpoint that most of the calcium carbonate prepared in the carbonation step described later has a spindle shape as the crystal form. The hydration step and the above carbon dioxide gas absorption step may be simultaneously performed, or may be successively performed: for example, the carbon dioxide gas absorption step is followed by the hydration step; or the hydration step is followed by the carbon dioxide gas absorption step. Preparing a calcium hydroxide having a BET specific surface area within an appropriate range in the hydration step is involved in the present embodiment to finally produce a calcium carbonate in an intended form.

In the fifth embodiment, the carbonation step is a step of reacting the lime milk prepared in the hydration step with the aqueous sodium carbonate solution prepared in the carbon dioxide gas absorption step to yield calcium carbonate. This step is also generally called a causticization step. In the step, the lime milk to be used is particularly preferably adjusted at a solid concentration of 11 to 24%. In particular, a lime milk at an initial concentration of 11 to 19% is preferably reacted with an aqueous sodium carbonate solution at a concentration of 15 to 24%. The aqueous sodium carbonate solution to be used is prepared by appropriately adjusting the concentration of the aqueous sodium carbonate solution that is prepared in the carbon dioxide gas absorption step and has a concentration of 15 to 24%. Depending on the reaction scale of the carbonation step, the aqueous sodium carbonate solution is gradually added to the lime milk particularly preferably over a certain time period, for example,-over 60 to 180 minutes or 100 to 150 minutes. The reaction in the carbonation step is preferably performed while the reaction liquid is stirred. Preferably, a stirrer may be controlled such that the time (complete mixing time) from gradually adding the aqueous sodium carbonate solution to the lime milk to completely mixing them is 3 to 25 seconds or 5 to 22 seconds. As the means for stirring the content in a reaction container, a conventionally used stirrer such as a propeller stirrer, a paddle blade stirrer, a ribbon stirrer, a turbine blade stirrer, a horseshoe stirrer, a spinning stirrer, a mixer, and a magnetic stirrer may be used.

To the lime milk having an adjusted initial solid concentration, the aqueous sodium carbonate solution prepared in the carbon dioxide gas absorption step and having an adjusted concentration is added, and the mixture is reacted at a temperature of 20 to 40°C. By the production method pertaining to the fifth embodiment, a calcium carbonate pertaining to a sixth embodiment of the present invention can be produced. The calcium carbonate pertaining to the sixth embodiment is preferably a calcite-type calcium carbonate having a spindle shape and having a BET specific surface area of 4 to 20 m²/g. An excessively high reaction temperature or an excessively low reaction temperature in the carbonation step increases the cost of energy or the like for heating or cooling and fails to produce a calcium carbonate having an intended shape and having an intended BET specific surface area. Through the reaction in the step, calcium carbonate and sodium hydroxide are formed, and the water-soluble sodium hydroxide is dissolved in the reaction liquid, whereas the poorly water-soluble calcium carbonate is precipitated as a solid.

The method in the fifth embodiment may further comprise a solid-liquid separation step in which the calcium carbonate produced by the reaction in the carbonation step is separated from the reaction liquid and is taken out in a solid state. The method may further comprise a washing step of washing the solid calcium carbonate prepared in the solid-liquid separation step with a washing liquid. The calcium carbonate prepared in the solid-liquid separation step is preferably washed with water. The liquid (filtrate) after separation of the solid calcium carbonate in the solid-liquid separation step and the used washing liquid after the washing step are an aqueous sodium hydroxide solution. The aqueous sodium hydroxide solution may be reused in the above carbon dioxide gas absorption step. To reuse the filtrate and the used washing liquid in the carbon dioxide gas absorption step, the sodium hydroxide concentration is preferably adjusted at 13 to 21%. To adjust the sodium hydroxide concentration, for example, an aqueous sodium hydroxide solution at a high concentration (an aqueous sodium hydroxide solution at a concentration of 13% or more) is added, solid sodium hydroxide is added, or the filtrate and the used washing liquid are concentrated by heating.

The filtrate after the solid-liquid separation step and the used washing liquid after the washing step may also be reused in the above hydration step. To reuse the filtrate and the used washing liquid in the hydration step, the sodium hydroxide concentration is preferably adjusted at less than 6%. To adjust the sodium hydroxide concentration, for example, water is added for dilution.

A seventh embodiment of the present invention is a method for producing a calcium carbonate. The method comprises a carbon dioxide gas absorption step of allowing an aqueous sodium hydroxide solution at a concentration of 13 to 21% to absorb carbon dioxide gas (carbon dioxide) to give an aqueous sodium carbonate solution at a concentration of 15 to 24%; a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and a carbonation step of adding the aqueous sodium carbonate solution prepared in the carbon dioxide gas absorption step to the lime milk and performing reaction.

In the carbonation step, the lime milk has an initial concentration of 11 to 24%, the aqueous sodium carbonate solution has a concentration of 15 to 24%, and the reaction is performed at 40 to 80°C to yield an aragonite-type calcium carbonate having a needle-like shape and having a BET specific surface area of 3 to 10 m²/g. The present embodiment is a method for producing a calcium carbonate at least comprising a carbon dioxide gas absorption step, a hydration step, and a carbonation step, as with the fifth embodiment. The carbon dioxide gas absorption step in the seventh embodiment is a step of allowing an aqueous sodium hydroxide solution to absorb carbon dioxide gas to give an aqueous sodium carbonate solution and may be performed in the same manner as in the carbon dioxide gas absorption step in the fifth embodiment.

Carbon dioxide gas unused in the carbon dioxide gas absorption step is not discharged into the atmosphere without treatment, but is particularly preferably reused by absorption in the aqueous sodium hydroxide solution in the carbon dioxide gas absorption step from the viewpoint of environmental preservation, as with the fifth embodiment.

In the seventh embodiment, the hydration step is a step of reacting calcium oxide with an aqueous sodium hydroxide solution at a concentration of 0 to less than 6% to give a lime milk. The hydration step in the seventh embodiment may be performed in the same manner as in the carbon dioxide gas absorption step in the fifth embodiment. In the seventh embodiment, the hydration step and the above carbon dioxide gas absorption step may be simultaneously performed, or may be successively performed: for example, the carbon dioxide gas absorption step is followed by the hydration step; or the hydration step is followed by the carbon dioxide gas absorption step. In particular, the calcium hydroxide contained in the lime milk prepared in the step preferably has a BET specific surface area of 5 to 20 m²/g from the viewpoint that most of the calcium carbonate prepared in the carbonation step described later has a needle-like aragonite shape as the crystal form. Preparing a calcium hydroxide having a BET specific surface area within an appropriate range in the hydration step is involved in the present embodiment to finally produce a calcium carbonate in an intended form.

In the seventh embodiment, the carbonation step is a step of reacting the lime milk prepared in the hydration step with the aqueous sodium carbonate solution prepared in the carbon dioxide gas absorption step to yield calcium carbonate. This step is also generally called a causticization step. In the step, the lime milk to be used is particularly preferably adjusted at a solid concentration of 11 to 24%. In particular, a lime milk at an initial concentration of 11 to 24% is preferably reacted with an aqueous sodium carbonate solution at a concentration of 15 to 24%. The aqueous sodium carbonate solution to be used is prepared by appropriately adjusting the concentration of the aqueous sodium carbonate solution that is prepared in the carbon dioxide gas absorption step and has a concentration of 15 to 24%. Depending on the reaction scale of the carbonation step, the aqueous sodium carbonate solution is gradually added to the lime milk particularly preferably over a certain time period, for example, over 60 to 180 minutes or 100 to 150 minutes. The reaction in the carbonation step is preferably performed while the reaction liquid is stirred. Preferably, a stirrer may be controlled such that the time (complete mixing time) from gradually adding the aqueous sodium carbonate solution to the lime milk to completely mixing them is 3 to 25 seconds or 5 to 22 seconds. As the means for stirring the content in a reaction container, a conventionally used stirrer such as a propeller stirrer, a paddle blade stirrer, a ribbon stirrer, a turbine blade stirrer, a horseshoe stirrer, a spinning stirrer, a mixer, and a magnetic stirrer may be used.

To the lime milk having an adjusted initial solid concentration, the aqueous sodium carbonate solution prepared in the carbon dioxide gas absorption step and having an adjusted concentration is added, and the mixture is reacted at a temperature of 40 to 80°C. By the production method pertaining to the seventh embodiment, a calcium carbonate pertaining to an eighth embodiment of the present invention can be produced. The calcium carbonate pertaining to the eighth embodiment is preferably an aragonite-type calcium carbonate having a needle-like shape and having a BET specific surface area of 3 to 10 m²/g. An excessively high reaction temperature or an excessively low reaction temperature in the carbonation step increases the cost of energy or the like for heating or cooling and fails to produce a calcium carbonate having an intended shape and having an intended BET specific surface area. When the BET specific surface area of calcium hydroxide is adjusted as described above to produce a calcium carbonate containing a large amount of aragonite-type crystals, and the carbonation step is performed at a high reaction temperature, the resulting (needle-like) aragonite crystals are likely to thicken. Through the reaction in the step, calcium carbonate and sodium hydroxide are formed, and the water-soluble sodium hydroxide is dissolved in the reaction liquid, whereas the poorly water-soluble calcium carbonate is precipitated as a solid.

The method in the seventh embodiment may further comprise a solid-liquid separation step in which the calcium carbonate produced by the reaction in the carbonation step is separated from the reaction liquid and is taken out in a solid state. The method may further comprise a washing step of washing the solid calcium carbonate prepared in the solid-liquid separation step with a washing liquid. The calcium carbonate prepared in the solid-liquid separation step is preferably washed with water. The liquid (filtrate) after separation of the solid calcium carbonate in the solid-liquid separation step and the used washing liquid after the washing step are an aqueous sodium hydroxide solution. The aqueous sodium hydroxide solution may be reused in the above carbon dioxide gas absorption step. To reuse the filtrate and the used washing liquid in the carbon dioxide gas absorption step, the sodium hydroxide concentration is preferably adjusted at 13 to 21%. To adjust the sodium hydroxide concentration, for example, an aqueous sodium hydroxide solution at a high concentration (an aqueous sodium hydroxide solution at a concentration of 13% or more) is added, solid sodium hydroxide is added, or the filtrate and the used washing liquid are concentrated by heating.

The filtrate after the solid-liquid separation step and the used washing liquid after the washing step may also be reused in the above hydration step. To reuse the filtrate and the used washing liquid in the hydration step, the sodium hydroxide concentration is preferably adjusted at less than 6%. To adjust the sodium hydroxide concentration, for example, water is added for dilution.

Flows of the fifth and seventh embodiments of the present invention will next be described with reference to FIG. 1. FIG. 1 shows a flow of the method for producing a calcium carbonate in the first or second embodiment of the present invention by using carbon dioxide gas in an exhaust gas from a combustion furnace or the like. In the drawing, 1 is a carbon dioxide gas absorption step; 2 is a hydration step; 3 is a carbonation step; 4 is a solid-liquid separation step; and 5 is a washing step. An exhaust gas from a combustion furnace or the like is optionally subjected to dust removing treatment to give a purified gas containing carbon dioxide gas. An aqueous sodium hydroxide solution adjusted at a concentration of 13 to 21% is separately prepared, for example, by appropriately mixing water for production with an aqueous sodium hydroxide solution at a high concentration, and is allowed to absorb the purified gas (carbon dioxide gas absorption step 1). Accordingly, an aqueous sodium carbonate solution at a concentration of 15 to 24% is prepared. Unreacted gas that has not been absorbed in the carbon dioxide gas absorption step 1 is returned as shown by the arrow 10 and is reused in the carbon dioxide gas absorption step 1.

Separately, calcium oxide and water for hydration (an aqueous sodium hydroxide solution at a concentration of 0 to less than 6%) are prepared and are reacted (hydration step 2). The reaction mixture is optionally subjected to classification or the like to give a purified lime milk that is a suspension of calcium hydroxide having a BET specific surface area of 5 to 40 m²/g.

The purified lime milk prepared as above is reacted with the aqueous sodium carbonate solution (carbonation step 3) to yield calcium carbonate. The formed calcium carbonate is filtered (solid-liquid separation step 4), and the resulting solid calcium carbonate is washed with a washing liquid (washing step 5). The filtrate after the solid-liquid separation step 4 and the used washing liquid after the washing step 5 are recovered and reused as the aqueous sodium hydroxide solution in the carbon dioxide gas absorption step 1 or as the water for hydration in the hydration step 2 (arrows 20 and 30).

In the fifth embodiment, in the carbonation step 3 in FIG. 1, the lime milk has an initial concentration of 11 to 19%, the aqueous sodium carbonate solution has a concentration of 15 to 24%, and the reaction is performed at 20 to 40°C. By the reaction, a calcite-type calcium carbonate having a spindle shape and having a BET specific surface area of 4 to 20 m²/g (sixth embodiment) can be produced. In the seventh embodiment, in the carbonation step 3 in FIG. 1, the lime milk has an initial concentration of 11 to 24%, the aqueous sodium carbonate solution has a concentration of 15 to 24%, and the reaction is performed at 40 to 80°C. By the reaction, an aragonite-type calcium carbonate having a needle-like shape and having a BET specific surface area of 3 to 10 m²/g (eighth embodiment) can be produced.

By the method for producing a calcium carbonate in the embodiment of the present invention, an aqueous sodium hydroxide solution at a relatively high concentration can efficiently absorb carbon dioxide gas. By the absorption, an aqueous sodium carbonate solution having an intended concentration can be prepared regardless of the concentration of carbon dioxide gas. By reacting, in the carbonation step, an aqueous sodium carbonate solution at a certain initial concentration with a lime milk at a certain initial solid concentration in a certain temperature range for a certain time period, a calcium carbonate having an intended shape can be produced.

The method for producing a calcium carbonate in the embodiment of the present invention can repeatedly reuse carbon dioxide gas and an aqueous sodium hydroxide solution, and this can reduce carbon dioxide and waste liquid discharged into the environment and lighten the environmental load.

### Examples

Examples of the present invention will next be described.

### [Example 1: Synthesis of calcite-type calcium carbonate having fine particle shape]

### (1) Carbon dioxide gas absorption step

To an aqueous sodium hydroxide solution at a concentration of 11.8%, a carbon dioxide-air mixed gas containing 30% by volume of carbon dioxide gas was introduced until the pH of the aqueous solution reached 11.5, giving 423 kg of an aqueous sodium carbonate solution at a concentration of 14.8%.

### (2) Hydration step

Calcium oxide was mixed with water and hydrated to give a lime milk as a suspension of calcium hydroxide. The BET specific surface area of the prepared calcium hydroxide was determined in accordance with JIS Z 8830 (ISO 9277: 2010) to be 15.9 m ²/g. The concentration of the lime milk was adjusted to give 553 kg of a lime milk at a solid concentration of 5.0%.

### (3) Carbonation step

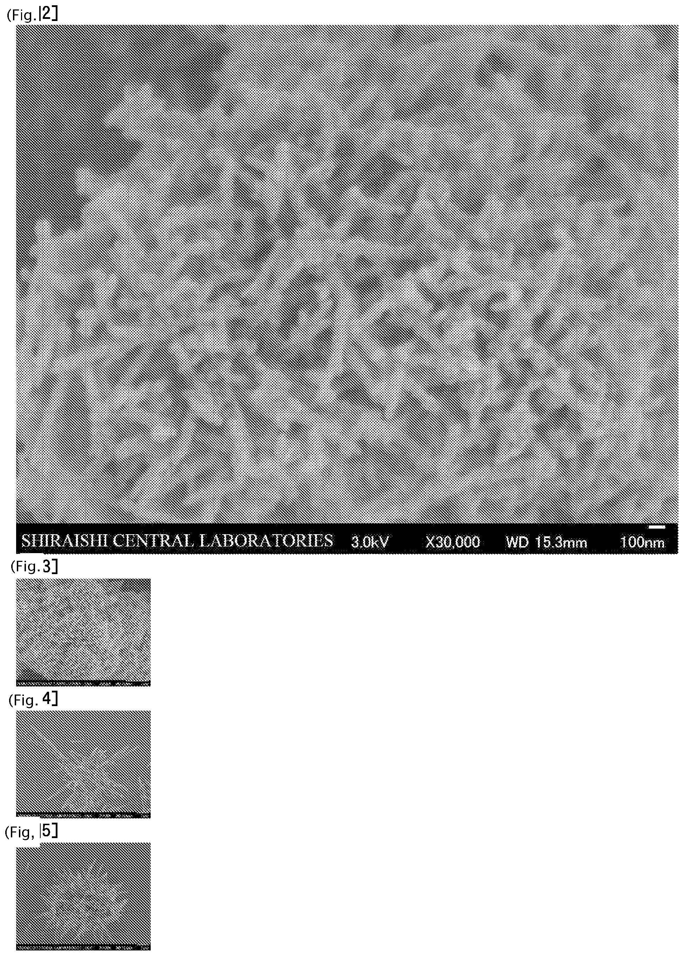

Into a reaction tank equipped with a propeller stirrer, 553 kg of the lime milk prepared in the hydration step was introduced. Into the reaction tank, 423 kg of the aqueous sodium carbonate solution prepared in the carbon dioxide gas absorption step was added over 120 minutes, and the reaction liquid was stirred. During the addition, the propeller stirrer was operated such that the complete mixing time in the reaction tank was 20 seconds, and the temperature in the reaction tank was adjusted at 15°C. After filtration of the resulting calcium carbonate suspension, the filter cake was washed with water and then was dried in a constant temperature dryer at 105°C for one hour, giving 49 kg of a calcium carbonate powder. The produced calcium carbonate was observed under an electron microscope, and fine particles about 20 nm in size were chained. FIG. 2 is an electron micrograph (magnification: ×30,000) of the calcium carbonate produced in Example 1. The calcium carbonate having a fine particle shape had a BET specific surface area of 60.0 m²/g (determined in accordance with JIS Z 8830). (In Table 1, the row of a carbonation step reaction temperature of 15°C, the column of an aqueous sodium carbonate solution concentration of 15%)

### [Other synthesis examples of calcite-type calcium carbonate having fine particle shape]

In Example 1, various aqueous sodium carbonate solutions at different concentrations were prepared. To the lime milk at a solid concentration of 5.0% prepared in the hydration step in Example 1, the above aqueous sodium carbonate solution at a different concentration was gradually added while the mixture was stirred by using a propeller stirrer. The temperature in the reaction tank was adjusted at 10°C, 15°C, or 20°C, and the carbonation step was performed. The results of the synthesis examples are shown in Table 1.

### [Table 1]

**[Table 1] Crystal shape (fine shape) and BET specific surface area (m²/g) of formed calcium carbonate The initial solid concentration of lime milk: 5.0%**

| | | Concentration of aqueous sodium carbonate solution (w/w%) | | | | | | | | | | | | | | | | |
|---|---|---|---|---|---|---|---|---|---|---|---|---|---|---|---|---|---|---|
| | | 5 | 6 | 7 | 8 | 9 | 10 | 11 | 12 | 13 | 14 | 15 | 16 | 17 | 18 | 19 | 20 | 21 |
| Carbonation step reaction temperature (°C) | 10 | Fine 70 | Fine 70 | Fine 70 | Fine 70 | Fine 80 | Fine 80 | Fine 80 | Fine 80 | - | - | - | - | - | - | - | - | - |
| | 15 | Fine 50 | Fine 50 | Fine 50 | Fine 50 | Fine 50 | Fine 60 | Fine 60 | Fine 60 | Fine 60 | Fine 60 | Fine 60 | - | - | - | - | - | - |
| | 20 | Fine 40 | Fine 40 | Fine 40 | Fine 40 | Fine 40 | Fine 40 | Fine 40 | Fine 40 | Fine 40 | Fine 40 | Fine 50 | Fine 50 | Fine 50 | Fine 50 | Fine 50 | Fine 50 | Fine 50 |

Table 1 shows the crystal shapes and the BET specific surface area of the calcium carbonates produced in the synthesis examples. For example, the result of Example 1 is shown as "fine 60" in the row of a carbonation step reaction temperature of 15°C and the column of an aqueous sodium carbonate solution concentration of 15% in Table 1. This means that the method in Example 1 yielded a calcite-type calcium carbonate having a fine particle shape and having a BET specific surface area of 60 m²/g (in Table, a value of BET specific surface area is the rounded value of an actual measured value). In Table 1, "-" means that the reaction was difficult to proceed in a predetermined condition because sodium carbonate was precipitated from an aqueous sodium carbonate solution in the condition.

As shown in Table 1, the method of the invention can produce a calcium carbonate having an intended crystal shape and an intended BET specific surface area by adjusting the solid concentration of the initial lime milk, the concentration of the aqueous sodium carbonate solution, and the reaction temperature in the carbonation step.

### [Example 2: Synthesis of calcite-type calcium carbonate having a spindle shape (1)]

### (1) Carbon dioxide gas absorption step

To an aqueous sodium hydroxide solution at a concentration of 12.9%, a carbon dioxide-air mixed gas containing 30% by volume of carbon dioxide gas was introduced until the pH of the aqueous solution reached 11.5, giving 630 kg of an aqueous sodium carbonate solution at a concentration of 16.0%.

### (2) Hydration step

Calcium oxide was mixed with water and hydrated to give a lime milk as a suspension of calcium hydroxide. The BET specific surface area of the prepared calcium hydroxide was determined in accordance with JIS Z 8830 (ISO 9277: 2010) to be 15.9 m²/g. The concentration of the lime milk was adjusted to give 389 kg of a lime milk at a solid concentration of 15.0%.

### (3) Carbonation step

Into a reaction tank equipped with a propeller stirrer, 389 kg of the lime milk prepared in the hydration step was introduced. Into the reaction tank, 630 kg of the aqueous sodium carbonate solution prepared in the carbon dioxide gas absorption step was added over 120 minutes, and the reaction liquid was stirred. During the addition, the propeller stirrer was operated such that the complete mixing time in the reaction tank was 21 seconds, and the temperature in the reaction tank was adjusted at 25°C. After filtration of the resulting calcium carbonate suspension, the filter cake was washed with water and then was dried in a constant temperature dryer at 105°C for one hour, giving 79 kg of a calcium carbonate powder. The produced calcium carbonate was observed under an electron microscope and had a spindle shape. FIG. 3 is an electron micrograph (magnification: ×20,000) of the calcium carbonate produced in Example 2. The calcite-type calcium carbonate having a spindle shape had a BET specific surface area of 5.9 m²/g (determined in accordance with JIS Z 8830). (In Table 2, the row of a carbonation step reaction temperature of 25°C, the column of an aqueous sodium carbonate solution concentration of 16%)

### [Example 3: Synthesis of aragonite-type calcium carbonate having a needle-like shape (1)]

### (1) Carbon dioxide gas absorption step

To an aqueous sodium hydroxide solution at a concentration of 12.9%, a carbon dioxide-air mixed gas containing 30% by volume of carbon dioxide gas was introduced until the pH of the aqueous solution reached 11.5, giving 630 kg of an aqueous sodium carbonate solution at a concentration of 16.0%.

### (2) Hydration step

Calcium oxide was mixed with water and hydrated to give a lime milk as a suspension of calcium hydroxide. The BET specific surface area of the prepared calcium hydroxide was determined in accordance with JIS Z 8830 (ISO 9277: 2010) to be 15.9 m²/g. The concentration of the lime milk was adjusted to give 389 kg of a lime milk at a solid concentration of 15.0%.

### (3) Carbonation step

Into a reaction tank equipped with a propeller stirrer, 389 kg of the lime milk prepared in the hydration step was introduced. Into the reaction tank, 630 kg of the aqueous sodium carbonate solution prepared in the carbon dioxide gas absorption step was added over 120 minutes, and the reaction liquid was stirred. During the addition, the propeller stirrer was operated such that the complete mixing time in the reaction tank was 21 seconds, and the temperature in the reaction tank was adjusted at 50°C. After filtration of the resulting calcium carbonate suspension, the filter cake was washed with water and then was dried in a constant temperature dryer at 105°C for one hour, giving 79 kg of a calcium carbonate powder. The produced calcium carbonate was observed under an electron microscope and was needle-like aragonite. FIG. 4 is an electron micrograph (magnification: ×10,000) of the calcium carbonate produced in Example 3. The aragonite-type calcium carbonate having a needle-like shape had a BET specific surface area of 6.3 m²/g (determined in accordance with JIS Z 8830). (In Table 2, the row of a carbonation step reaction temperature of 50°C, the column of an aqueous sodium carbonate solution concentration of 16%)

### [Example 4: Synthesis of aragonite-type calcium carbonate having a needle-like shape (2)]

### (1) Carbon dioxide gas absorption step

To an aqueous sodium hydroxide solution at a concentration of 15.6%, a carbon dioxide-air mixed gas containing 30% by volume of carbon dioxide gas was introduced until the pH of the aqueous solution reached 11.5, giving 666 kg of an aqueous sodium carbonate solution at a concentration of 19.0%.

### (2) Hydration step

Calcium oxide was mixed with water and hydrated to give a lime milk as a suspension of calcium hydroxide. The BET specific surface area of the prepared calcium hydroxide was determined in accordance with JIS Z 8830 (ISO 9277: 2010) to be 15.9 m²/g. The concentration of the lime milk was adjusted to give 366 kg of a lime milk at a solid concentration of 20.0%.

### (3) Carbonation step

Into a reaction tank equipped with a propeller stirrer, 366 kg of the lime milk prepared in the hydration step was introduced. Into the reaction tank, 666 kg of the aqueous sodium carbonate solution prepared in the carbon dioxide gas absorption step was added over 120 minutes, and the reaction liquid was stirred. During the addition, the propeller stirrer was operated such that the complete mixing time in the reaction tank was 21 seconds, and the temperature in the reaction tank was adjusted at 50°C. After filtration of the resulting calcium carbonate suspension, the filter cake was washed with water and then was dried in a constant temperature dryer at 105°C for one hour, giving 99 kg of a calcium carbonate powder. The produced calcium carbonate was observed under an electron microscope and was needle-like aragonite. FIG. 5 is an electron micrograph (magnification: ×10,000) of the calcium carbonate produced in Example 4. The aragonite-type calcium carbonate having a needle-like shape had a BET specific surface area of 8.5 m²/g (determined in accordance with JIS Z 8830). (In Table 3, the row of a carbonation step reaction temperature of 50°C, the column of an aqueous sodium carbonate solution concentration of 19%)

### [Example 5: Synthesis of aragonite-type calcium carbonate having a needle like shape (3)]

### (1) Carbon dioxide gas absorption step

To an aqueous sodium hydroxide solution at a concentration of 12.9%, a carbon dioxide-air mixed gas containing 30% by volume of carbon dioxide gas was introduced until the pH of the aqueous solution reached 11.5, giving 630 kg of an aqueous sodium carbonate solution at a concentration of 16.0%.

### (2) Hydration step

Calcium oxide was mixed with water and hydrated to give a lime milk as a suspension of calcium hydroxide. The BET specific surface area of the prepared calcium hydroxide was determined in accordance with JIS Z 8830 (ISO 9277: 2010) to be 15.9 m²/g. The concentration of the lime milk was adjusted to give 389 kg of a lime milk at a solid concentration of 15.0%.

### (3) Carbonation step

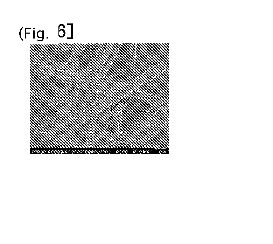

Into a reaction tank equipped with a propeller stirrer, 389 kg of the lime milk prepared in the hydration step was introduced. Into the reaction tank, 630 kg of the aqueous sodium carbonate solution prepared in the carbon dioxide gas absorption step was added over 120 minutes, and the reaction liquid was stirred. During the addition, the propeller stirrer was operated such that the complete mixing time in the reaction tank was 21 seconds, and the temperature in the reaction tank was adjusted at 80°C. After filtration of the resulting calcium carbonate suspension, the filter cake was washed with water and then was dried in a constant temperature dryer at 105°C for one hour, giving 79 kg of a calcium carbonate powder. The produced calcium carbonate was observed under an electron microscope and was needle-like aragonite. FIG. 6 is an electron micrograph (magnification: ×10,000) of the calcium carbonate produced in Example 5. The aragonite-type calcium carbonate having a needle-like shape had a BET specific surface area of 3.4 m²/g (determined in accordance with JIS Z 8830). (In Table 2, the row of a carbonation step reaction temperature of 80°C, the column of an aqueous sodium carbonate solution concentration of 16%)

### [Other synthesis examples of calcite-type calcium carbonate having a spindle shape]

In Example 1, various aqueous sodium carbonate solutions at different concentrations were prepared. To the lime milk at a solid concentration of 15.0% prepared in the hydration step in Example 1, the above aqueous sodium carbonate solution at a different concentration was gradually added while the mixture was stirred by using a propeller stirrer. The temperature in the reaction tank was adjusted at 20°C, 25°C, or 40°C, and the carbonation step was performed. The results of the synthesis examples are shown in Table 2.

### [Other synthesis examples of aragonite-type calcium carbonate having a needle-like shape]

In Example 2, various aqueous sodium carbonate solutions at different concentrations were prepared. To the lime milk at a solid concentration of 15.0% prepared in the hydration step in Example 2, the above aqueous sodium carbonate solution at a different concentration was gradually added while the mixture was stirred by using a propeller stirrer. The temperature in the reaction tank was adjusted at 50°C, 65°C, 70°C, or 80°C, and the carbonation step was performed. The results of the synthesis examples are shown in Table 2.

In Example 4, various aqueous sodium carbonate solutions at different concentrations were prepared. To the lime milk at a solid concentration of 20.0% prepared in the hydration step in Example 3, the above aqueous sodium carbonate solution at a different concentration was gradually added while the mixture was stirred by using a propeller stirrer. The temperature in the reaction tank was adjusted at 40°C, 50°C, 60°C, 70°C, or 80°C, and the carbonation step was performed. The results of the synthesis examples are shown in Table 3.

### [Table 2]

**[Table 2] Crystal shape (spindle or needle-like) and BET specific surface area (m²/g) of formed calcium carbonate The initial solid concentration of lime milk: 15.0%**

| | | Concentration of aqueous sodium carbonate solution (w/w%) | | | | | | | |
|---|---|---|---|---|---|---|---|---|---|
| | | 16 | 17 | 18 | 19 | 20 | 21 | 22 | 23 |
| Carbonation step reaction temperature (°C) | 20 | Spindle 15 | Spindle 15 | Spindle 15 | Spindle 15 | Spindle 20 | Spindle 20 | - | - |
| | 25 | Spindle 6 | Spindle 6 | Spindle 6 | Spindle 6 | Spindle 10 | Spindle 10 | Spindle 10 | |
| | 40 | Spindle 4 | Spindle 4 | Spindle 4 | Spindle 4 | Spindle 4 | Spindle 5 | Spindle 5 | |
| | 50 | Needle-like 6 | Needle-like 7 | Needle-like 7 | Needle-like 7 | Needle-like 8 | Needle-like 8 | Needle-like 8 | Needle-like 8 |
| | 60 | Needle-like 6 | Needle-like 6 | Needle-like 6 | Needle-like 6 | Needle-like 7 | Needle-like 7 | Needle-like 7 | Needle-like 7 |
| | 70 | Needle-like 4 | Needle-like 4 | Needle-like4 | Needle-like 4 | Needle-like 5 | Needle-like 5 | Needle-like 5 | Needle-like 5 |
| | 80 | Needle-like 3 | Needle-like 3 | Needle-like 3 | Needle-like 3 | Needle-like 4 | Needle-like 4 | Needle-like4 | Needle-like 4 |

### [Table 3]

**[Table 3] Crystal shape (spindle or needle-like) and BET specific surface area (m²/g) of formed calcium carbonate The initial solid concentration of lime milk: 20.0%**

| | | Concentration of aqueous sodium carbonate solution (w/w%) | | | | | | | |
|---|---|---|---|---|---|---|---|---|---|
| | | 16 | 17 | 18 | 19 | 20 | 21 | 22 | 23 |
| Carbonation step reaction temperature (°C) | 40 | Needle-like 10 | Needle-like 10 | Needle-like 10 | Needle-like 10 | Needle-like 15 | Needle-like 15 | Needle-like 15 | Needle-like 15 |
| | 50 | Needle-like 8 | Needle-like 8 | Needle-like 8 | Needle-like 9 | Needle-like 10 | Needle-like 10 | Needle-like 10 | Needle-like 10 |
| | 60 | Needle-like 7 | Needle-like 7 | Needle-like 7 | Needle-like 7 | Needle-like 8 | Needle-like 8 | Needle-like 8 | Needle-like 8 |
| | 70 | Needle-like 6 | Needle-like 6 | Needle-like 6 | Needle-like 6 | Needle-like 7 | Needle-like 7 | Needle-like 7 | Needle-like 7 |
| | 80 | Needle-like 4 | Needle-like 4 | Needle-like 4 | Needle-like 4 | Needle-like 5 | Needle-like 5 | Needle-like 5 | Needle-like 5 |

Table 2 and Table 3 show the crystal shapes and the BET specific surface area of the calcium carbonates produced in the synthesis examples. For example, the result of Example 2 is shown as "spindle 6" in the row of a carbonation step reaction temperature of 25°C and the column of an aqueous sodium carbonate solution concentration of 19% in Table 2. This means that the method in Example 2 yielded a calcite-type calcium carbonate having a spindle shape and having a BET specific surface area of 6 m²/g (in Tables, a value of BET specific surface area is the rounded value of an actual measured value). In Table 2 and Table 3, "-" means that the reaction was difficult to proceed in a predetermined condition because sodium carbonate was precipitated from an aqueous sodium carbonate solution in the condition.

As shown in Table 2 and Table 3, the method of the invention can separately produce a calcium carbonate having an intended crystal shape and an intended BET specific surface area by adjusting the solid concentration of the initial lime milk, the concentration of the aqueous sodium carbonate solution, and the reaction temperature in the carbonation step.

In the method of the invention, an aqueous sodium hydroxide solution at a relatively high concentration absorbs carbon dioxide gas, and thus carbon dioxide gas can be efficiently used. By the method of the invention, needle-like calcium carbonates and spindle calcium carbonates were able to be produced. By changing the concentrations of the lime milk and the aqueous sodium carbonate solution, the reaction temperature, the reaction time, the mixing time, or other conditions in the carbonation step, a calcium carbonate having an intended crystal form can be separately produced. The method of the invention reuses carbon dioxide gas, a filtrate, or the like and thus can generally lighten the load on the environment.

### INDUSTRIAL APPLICABILITY

The calcium carbonate produced by the method of the invention can be used particularly as a filler for sealing materials, adhesives, rubber compositions, plastic compositions, paper, and the like and can be widely used as a pigment for paper coating and a pigment for paints and inks.

## Claims

1. A method for producing a calcium carbonate, the method comprising:
a carbon dioxide gas absorption step of allowing an aqueous sodium hydroxide solution at a concentration of 5 to 21% to absorb carbon dioxide gas to give an aqueous sodium carbonate solution at a concentration of 4 to 24%;
a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and
a carbonation step of adding the aqueous sodium carbonate solution to the lime milk and performing reaction.

2. The production method according to claim 1, wherein in the carbonation step, the lime milk is adjusted at a concentration of 1 to 24%, the aqueous sodium carbonate solution is added to the lime milk having an adjusted solid concentration, and the reaction is performed at a temperature of 9 to 80°C.

3. The production method according to claim 1 or 2, further comprising, after the carbonation step, a solid-liquid separation step of separating a filtrate containing sodium hydroxide from calcium carbonate.

4. The production method according to claim 3, wherein the filtrate containing sodium hydroxide is adjusted at a sodium hydroxide concentration of 5 to 21% and is reused in the carbon dioxide gas absorption step.

5. A calcium carbonate produced by the production method according to any one of claims 1 to 4.

6. A method for producing a calcium carbonate, the method comprising:
a carbon dioxide gas absorption step of allowing an aqueous sodium hydroxide solution at a concentration of 5 to 21% to absorb carbon dioxide gas to give an aqueous sodium carbonate solution at a concentration of 4 to 24%;
a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and
a carbonation step of adding the aqueous sodium carbonate solution prepared in the carbon dioxide gas absorption step to the lime milk and performing reaction, wherein
in the carbonation step, the lime milk has an initial concentration of 1 to 6%, the aqueous sodium carbonate solution has a concentration of 4 to 24%, and the reaction is performed at 9 to 25°C to yield a calcite-type calcium carbonate having a fine particle shape and having a BET specific surface area of 30 to 90 m²/g.

7. The production method according to claim 6, wherein carbon dioxide gas unused in the carbon dioxide gas absorption step is reused in the carbon dioxide gas absorption step.

8. The production method according to claim 6 or 7, further comprising:
after the carbonation step, a solid-liquid separation step of separating a filtrate containing sodium hydroxide from calcium carbonate; and
a washing step of washing the calcium carbonate prepared in the solid-liquid separation step with a washing liquid.

9. The production method according to claim 8, wherein the filtrate prepared in the solid-liquid separation step and a used washing liquid after the washing step are mixed with an aqueous sodium hydroxide solution at a high concentration, or the filtrate and the used washing liquid are concentrated by heating, to give an aqueous solution containing sodium hydroxide at a concentration of 5 to 21%, and the aqueous solution is used in the carbon dioxide gas absorption step.

10. The production method according to claim 8 or 9, wherein the filtrate prepared in the solid-liquid separation step and the used washing liquid after the washing step are adjusted to give an aqueous solution containing sodium hydroxide at a concentration of less than 6%, and the aqueous solution is used in the hydration step.

11. A calcium carbonate produced by the production method according to any one of claims 6 to 10.

12. A method for producing a calcium carbonate, the method comprising:
a carbon dioxide gas absorption step of allowing an aqueous sodium hydroxide solution at a concentration of 13 to 21% to absorb carbon dioxide gas to give an aqueous sodium carbonate solution at a concentration of 15 to 24%;
a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and
a carbonation step of adding the aqueous sodium carbonate solution prepared in the carbon dioxide gas absorption step to the lime milk and performing reaction, wherein
in the carbonation step, the lime milk has an initial concentration of 11 to 19%, the aqueous sodium carbonate solution has a concentration of 15 to 24%, and the reaction is performed at 20 to 40°C to yield a calcite-type calcium carbonate having a spindle shape and having a BET specific surface area of 4 to 20 m²/g.

13. The production method according to claim 12, wherein carbon dioxide gas unused in the carbon dioxide gas absorption step is reused in the carbon dioxide gas absorption step.

14. The production method according to claim 12 or 13, further comprising:
after the carbonation step, a solid-liquid separation step of separating a filtrate containing sodium hydroxide from calcium carbonate; and
a washing step of washing the calcium carbonate prepared in the solid-liquid separation step with a washing liquid.

15. The production method according to claim 14, wherein the filtrate prepared in the solid-liquid separation step and a used washing liquid after the washing step are mixed with an aqueous sodium hydroxide solution at a high concentration, or the filtrate and the used washing liquid are concentrated by heating, to give an aqueous solution containing sodium hydroxide at a concentration of 13 to 21%, and the aqueous solution is used in the carbon dioxide gas absorption step.

16. The production method according to claim 14 or 15, wherein the filtrate prepared in the solid-liquid separation step and the used washing liquid after the washing step are adjusted to give an aqueous solution containing sodium hydroxide at a concentration of less than 6%, and the aqueous solution is used in the hydration step.

17. A calcium carbonate produced by the production method according to any one of claims 12 to 16.

18. A method for producing a calcium carbonate, the method comprising:
a carbon dioxide gas absorption step of allowing an aqueous sodium hydroxide solution at a concentration of 13 to 21% to absorb carbon dioxide gas to give an aqueous sodium carbonate solution at a concentration of 15 to 24%;
a hydration step of reacting calcium oxide with an aqueous sodium hydroxide solution at a concentration of 0 to less than 6% to give a lime milk that is a suspension of calcium hydroxide having a BET specific surface area of 5 to 40 m²/g; and
a carbonation step of adding the aqueous sodium carbonate solution prepared in the carbon dioxide gas absorption step to the lime milk and performing reaction, wherein
in the carbonation step, the lime milk has an initial concentration of 11 to 24%, the aqueous sodium carbonate solution has a concentration of 15 to 24%, and the reaction is performed at 40 to 80°C to yield an aragonite-type calcium carbonate having a needle-like shape and having a BET specific surface area of 3 to 10 m²/g.

19. The production method according to claim 18, wherein carbon dioxide gas unused in the carbon dioxide gas absorption step is reused in the carbon dioxide gas absorption step.

20. The production method according to claim 18 or 19, further comprising:
after the carbonation step, a solid-liquid separation step of separating a filtrate containing sodium hydroxide from calcium carbonate; and
a washing step of washing the calcium carbonate prepared in the solid-liquid separation step with a washing liquid.

21. The production method according to claim 20, wherein the filtrate prepared in the solid-liquid separation step and a used washing liquid after the washing step are mixed with an aqueous sodium hydroxide solution at a high concentration, or the filtrate and the used washing liquid are concentrated by heating, to give an aqueous solution containing sodium hydroxide at a concentration of 13 to 21%, and the aqueous solution is used in the carbon dioxide gas absorption step.

22. The production method according to claim 20 or 21, wherein the filtrate prepared in the solid-liquid separation step and the used washing liquid after the washing step are adjusted to give an aqueous solution containing sodium hydroxide at a concentration of less than 6%, and the aqueous solution is used in the hydration step.

23. A calcium carbonate produced by the production method according to any one of claims 18 to 22.
